# EUROPEAN PATENT APPLICATION

(11) **EP 0 985 552 A2**
(43) Date of publication of application: **15.03.2000**
(21) Application number: 99117407.9
(22) Date of filing: 07.09.1999
(51) Int. Cl.: B60B 3/04

(54) **Disc wheel for passenger car**

(30) Priority: 08.09.1998 JP 25347698; 08.09.1998 JP 25347798; 08.09.1998 JP 25347898; 08.09.1998 JP 25347998
(71) Applicant: Central Motor Wheel Co., Ltd., Anjo-shi, Aichi-ken (JP); Fuji Seiko Co. Ltd., Hashima-shi (JP)
(72) Inventor: Shimizu, Kiichi, c/o Central Motor Wheel Co.,LTD, Anjo-shi (JP); Takagi, Shigemasa, c/oFuji Seiko co.,LTD, Hashima-shi (JP)
(74) Representative: Albrecht, Thomas, Dr.

(57) **Abstract**

A disc wheel for a passenger car has a plate-like rim (1) and a plate-like disc (2), the disc (2) having a hub mounting portion (3) extending in a direction perpendicular to an axis thereof, a hat middle portion continuously extending from the hub mounting portion (3) toward an outer side in a radial direction and an outer side in an axial direction, a hat top portion (4) continuously extending from the hat middle portion, and a ventilation hole portion (6) continuously extending from the hat top portion toward an inner peripheral surface of the rim (1) and a flange portion continuously extending from the ventilation hole portion and fitted to the inner peripheral surface of the rim. In the disc wheel, the rim inner peripheral surface and the disc flange are welded. Further, the disc has ventilation holes. In the disc wheel for the passenger car, in order to reduce a weight without reducing a fatigue life in a rotational bending fatigue test, a thickness of the disc wheel is varied in a diametrical direction at at least one of the hub mounting portion, the hat middle portion, the hat top portion, the ventilation hole portion and the flange portion.

## Description

### BACKGROUND OF THE INVENTION

### FIELD OF THE INVENTION

The present invention relates to a disc wheel for a passenger car.

Conventionally, a plate-like disc in a disc wheel for a motor vehicle such as a passenger car, a motor truck and the like is generally press formed. In this press formation, it is hard to set a distribution of a thickness of the disc to a desired level, and there are the following problems.

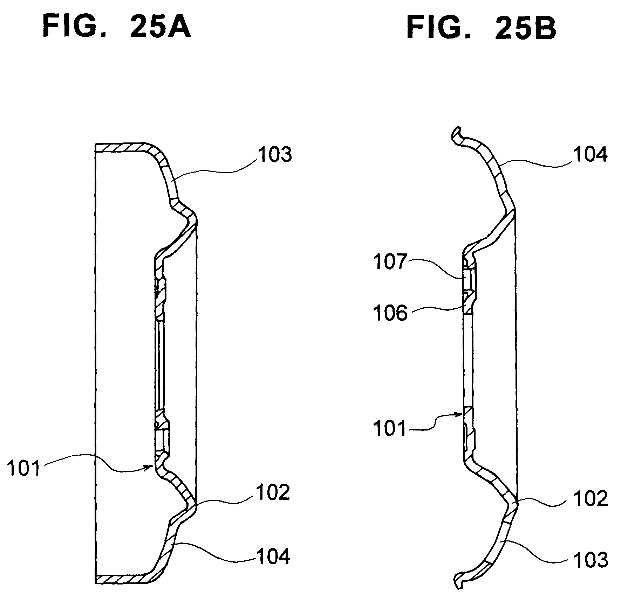

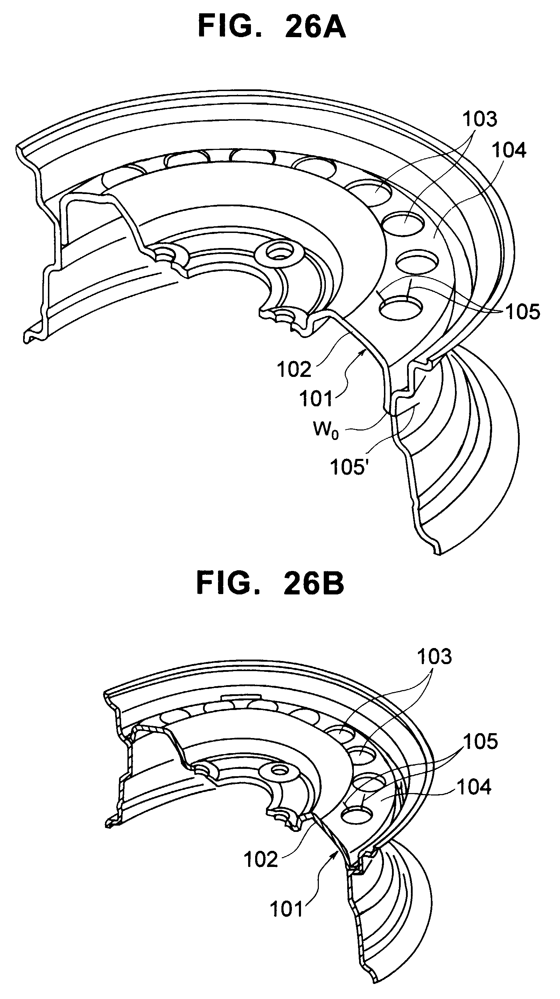

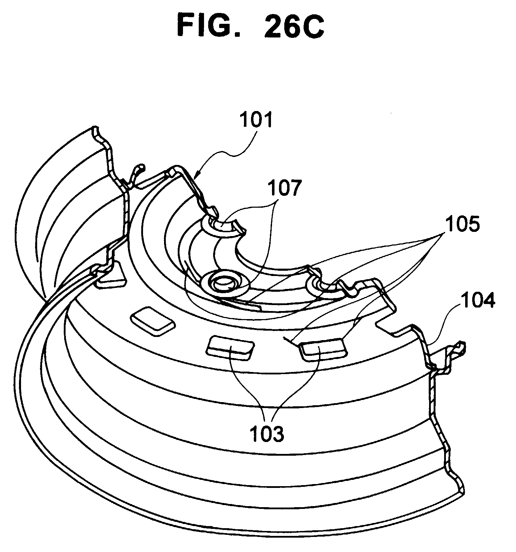

Generally, in order to radiate a breaking heat, the disc wheel for the motor vehicle is formed with a ventilation hole 103 in a portion outside a hat portion 102 of a disc 101, as shown in Figs. 25A and 25B. Accordingly, this ventilation hole portion 104 becomes the weakest portion in a rotational bending fatigue test, and in most cases, a crack 105 is generated in the ventilation hole portion 104, as shown in Figs. 26A, 26B and 26C. In order to secure a strength of the weakest portion, it is necessary to increase a thickness of the portion 104. Further, in some cross sectional shapes, a hub mounting portion 106 becomes the weakest portion since a bolt hole 10 is provided there and there is a case that the crack 105 is generated.

Accordingly, in the structure formed by a press molding as mentioned above, a thickness necessary for satisfying a strength of the ventilation hole portion 104 or the hub mounting portion 106 is a thickness of a whole of the disc, and a thickness of the portion having a sufficient strength has to be equal to the thickness of the weakest portion. Accordingly, unless the strength of the ventilation hole portion 104 or the hub mounting portion 106 is improved, a reduction of a weight is limited.

Further, when the thickness of the whole of the disc is increased, a stress is concentrated to a welding portion between the disc and a rim, so that there is a problem that a crack 105' is generated in a rim drop portion of a welding portion W₀, as shown in Fig. 26A.

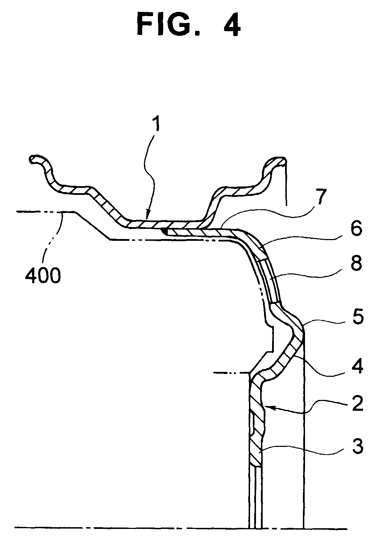

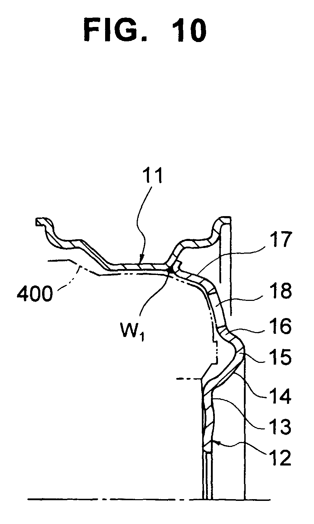

Further, in order to prevent an interference against a brake portion 400 as shown in Figs. 4 and 10 and improve a design, a shape of the disc is frequently limited. Accordingly, an optimum design for the shape can not be performed and a stress balance deteriorates, so that in many cases, a fatigue life can not be secured without increasing the thickness. As mentioned above, in the case of increasing a partial thickness, it is necessary to increase the thickness of the whole of the disc and a reduction of the weight is limited.

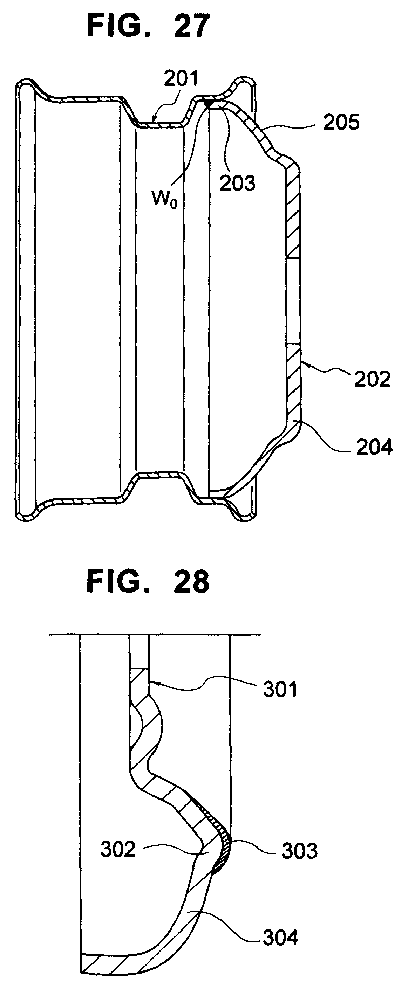

Further, in a double mounting type disc wheel used in a motor truck and a motor bus, a thickness of a joint welding portion 203 in a disc 202 with respect to a rim 201 is set to be smaller than a thickness of a hub mounting portion 204 and a thickness of a hat portion 205 is set to be smaller than a thickness of the joint welding portion 203, as shown in Fig. 27, whereby a disc wheel having a uneven thickness is obtained. This type of disc wheel is, for example, disclosed in Japanese Patent Unexamined Publication No. 7-257101. This structure aims at preventing a stress concentration to the joint welding portion 203 in the disc, at improving a fatigue strength and at making a weight light. However, if in the structure that the ventilation holes are formed in the hat portion as the disc wheel for a passenger car, the disc wheel having an uneven thickness is used, the ventilation hole is formed in the thin hat portion 205, so that there is a problem that the crack mentioned above is generated in the hat portion 205.

Further, as shown in Fig. 27, a thickness of a flange portion corresponding to the joint welding portion 203 in the disc 202 is generally greater than a thickness of the hat portion 205 due to a drawing formation. Inherently, the flange portion 203 may have a low stress ratio and a reduced thickness, however, in general, with respect to the wheel strength, the rim can be made thinner than the disc, and further, when a difference in thickness between the rim and the disc is great, a stress is concentrated in a rim side of the welding portion W₀ and a crack is easily generated.

Accordingly, as mentioned above, when the thickness of the flange portion in the disc 202 is great, it is necessary to make the thickness of the rim great in order to secure a fatigue strength and reduce the thickness difference, so that it causes an increase of the wheel weight.

Further, as an uneven thickness disc wheel of a passenger car type, as shown in Fig. 28, there is disclosed, for example, in Japanese Patent Unexamined Publication No. 1-104423 a method of applying an excess metal 303 to a hat R portion 302 of a disc 301 so as to increase the thickness, however, since the thickness of a ventilation hole portion 304 is not increased in the disc produced in accordance with this method, there is a problem that the same crack as mentioned above is generated in the ventilation hole portion 304.

### SUMMARY OF THE INVENTION

Accordingly, an object of the present invention is to provide a disc wheel for a passenger car, in particular, a disc wheel for a passenger car fitting a flange of a disc to a drop portion of a rim, in which a stress balance is improved, a fatigue life in a rotational bending fatigue test is improved, a weight can be reduced, and a generation of a crack in a ventilation hole portion can be prevented.

In order to solve the problem mentioned above, in accordance with the present invention, there is provided a disc wheel for a passenger car comprising a plate-like rim, a plate-like disc, the disc having a hub mounting portion extending in a direction perpendicular to an axis thereof, a hat middle portion continuously extending from the hub mounting portion toward an outer side in a radial direction and an outer side in an axial direction, a hat top portion continuously extending from the hat middle portion, a ventilation hole portion continuously extending from the hat top portion toward an inner peripheral surface of the rim and a flange portion continuously extending from the ventilation hole portion and fitted in the inner peripheral surface of the rim, and the rim inner peripheral surface and the disc flange being welded, wherein a thickness of the disc is varied in a diametrical direction at at least one of the hub mounting portion, the hat middle portion, the hat top portion, the ventilation hole portion and the flange portion.

In a first aspect in accordance with the present invention, the structure can be made such that the thickness of the hub mounting portion is set to be equal to or smaller than an original thickness of a raw material, the thickness of the hat middle portion and the hat top portion is set to be smaller than that of the hub mounting portion, the thickness of the ventilation hole portion is set to be the original thickness of the raw material, and the thickness of the flange portion is set to be smaller than the thickness of any portions between the hub mounting portion and the ventilation hole portion.

A hat outer peripheral portion of the disc is inherently structured such that a stress ratio may be low and a thickness may be small, however, in the case that the ventilation hole is formed in the hat outer peripheral portion such as the disc wheel for the passenger car, a cross sectional area at this portion is reduced and a rigidity is lowered. Further, a stress is concentrated to the ventilation hole portion and a crack is easily generated.

Therefore, in accordance with the first aspect, it is possible to increase the rigidity and reduce the stress ratio in the ventilation hole portion by increasing the thickness in the ventilation hole portion.

Accordingly, it is possible to make the stress balance optimum by setting the thickness in each of the portions as in the present invention.

Further, in the first aspect mentioned above, the structure may be made such that when setting the thickness of the raw material of the disc to 1, the thickness of the hub mounting portion is 0.8 to 1.0, the thicknesses of the hat middle portion and the hat top portion are 0.75 to 0.90, the thickness of the ventilation hole portion extending from the hat top portion to the flange portion is 1.0, the thickness of the flange portion is 0.5 to 0.7, and a rounded portion connecting the respective portions may be a gradually changing rounded portion.

In this structure, the same operation as that of the first aspect can be obtained.

Further, in the structure mentioned above, the thickness of the drop portion in the rim may be set to 0.4 to 0.7 when setting the thickness of the raw material of the disc to 1.

In accordance with the first aspect, since the flange portion of the disc is made thin as mentioned above, it is possible to reduce the thickness difference between the flange portion and the drop portion by reducing the thickness of the drop portion in the rim to which the flange portion is fitted. Accordingly, it is possible to reduce the thicknesses of the flange portion and the drop portion so as to realize a light weight of the disc wheel.

Further, in the structure mentioned above, a chamfering may be applied to a sharp edge in the ventilation hole formed in the ventilation hole portion.

Generally, since the ventilation hole is formed by a piercing process, the sharp edge is generated at a time of processing, so that a notch sensibility is increased, which becomes a great reason for reducing a fatigue life. However, in accordance with the present invention, an influence of the notch is reduced by chamfering the sharp edge, so that a crack is prevented from being generated.

Further, in order to solve the problem mentioned above, in accordance with a second aspect of the present invention, the structure can be made such that the thickness of the hub mounting portion is set to be equal to or smaller than the original thickness of the raw material, the thicknesses of the hat middle portion and the hat top portion are set to be smaller than that of the hub mounting portion, the thickness of the ventilation hole portion is set to be equal to the original thickness of the raw material, and the thickness of the flange portion is set to be smaller than those of the hat middle portion and the hat top portion.

As mentioned above, the hat outer peripheral portion of the disc is inherently structured such that a stress ratio may be low and a thickness may be small, however, in the case that the ventilation hole is formed in the hat outer peripheral portion such as the disc wheel for the passenger car, a cross sectional area at this portion is reduced and a rigidity is lowered. Further, a stress is concentrated to the ventilation hole portion and a crack is easily generated.

Therefore, in accordance with the second aspect, it is possible to increase the rigidity and reduce the stress ratio in the ventilation hole portion by increasing the thickness in the ventilation hole portion.

Accordingly, it is possible to make the stress balance optimum by setting the thickness in each of the portions as in the present invention.

Further, in the second aspect mentioned above, the structure may be made such that when setting the thickness of the raw material of the disc to 1, the thickness of the hub mounting portion is 0.8 to 1.0, the thicknesses of the hat middle portion and the hat top portion are 0.75 to 0.90, the thickness of the ventilation hole portion extending from the hat top portion to the flange portion is 1.0, the thickness of the flange portion is 0.55 to 0.75, and a rounded portion connecting the respective portions is a gradually changing rounded portion.

In accordance with this structure, the same operation as that of the second aspect mentioned above can be obtained.

Further, in the structure mentioned above, a chamfering may be applied to a sharp edge in the ventilation hole formed in the ventilation hole portion in the same manner as that mentioned above.

Further, in order to solve the problem mentioned above, in accordance with a third aspect of the present invention, the structure can be made such that the thickness of the hub mounting portion, the hat middle portion and the hat top portion is set to be substantially equal to the original thickness of the raw material, the thickness of the ventilation hole portion and the flange portion is set to be equal to each other and smaller than that of the hat top portion, and the thickness around the ventilation hole is set to be 1.0 to 1.3 times the original thickness of the raw material and to be formed in a convex shape.

As mentioned above, the hat outer peripheral portion of the disc is inherently structured such that a stress ratio may be low and thus a thickness may be small, however, in the case that the ventilation hole is formed in the hat outer peripheral portion such as the disc wheel for the passenger car, a cross sectional area at this portion is reduced and a rigidity is lowered. Further, a stress is concentrated to the ventilation hole portion and a crack is easily generated.

Therefore, in accordance with the third aspect, it is possible to increase the rigidity and reduce the stress ratio in the ventilation hole portion by forming a convex portion around the ventilation hole so as to increase the thickness of the ventilation hole portion.

Accordingly, it is possible to make the stress balance optimum by setting the thickness in each of the portions as mentioned above.

Further, in the third aspect mentioned above, the structure may be made such that when setting the thickness of the raw material of the disc to 1, the thicknesses of the hub mounting portion, the hat middle portion and the hat top portion are set to be substantially 1, the thicknesses of the ventilation hole portion and the flange portion are set to 0.6 to 0.8, the thickness of the convex portion around the ventilation hole is set to 1.0 to 1.3, and a rounded portion connecting the respective portions is a gradually changing rounded portion.

In accordance with this structure, the same operation as that of the third aspect mentioned above can be obtained.

Further, in the structure mentioned above, a chamfering may be applied to a sharp edge in the ventilation hole formed in the ventilation hole portion in the same manner as that mentioned above.

Further, in order to solve the problem mentioned above, in accordance with a fourth aspect of the present invention, the structure can be made such that the thickness from the hub mounting portion via the hat middle portion to the hat top portion is set to be substantially equal to the original thickness of the raw material, the thicknesses from the hat middle portion to the ventilation hole portion and the flange portion are set to be smaller than the thickness of the hub mounting portion, and the inner periphery of the ventilation hole portion is made thicker than the hub mounting portion by a burring process.

As mentioned above, the hat outer peripheral portion of the disc is inherently structured such that a stress ratio may be low and thus a thickness may be small, however, in the case that the ventilation hole is formed in the hat outer peripheral portion such as the disc wheel for the passenger car, a cross sectional area at this portion is reduced and a rigidity is lowered. Further, a stress is concentrated to the ventilation hole portion and a crack is easily generated.

Therefore, in accordance with the fourth aspect, it is possible to increase the rigidity and reduce the stress ratio in the ventilation hole portion by making the inner peripheral portion of the hole in the ventilation hole portion thicker than the hub mounting portion by a burring process.

Accordingly, it is possible to make the stress balance optimum by setting the thickness in each of the portions as mentioned above.

Further, in the fourth aspect mentioned above, the structure may be made such that when setting the thickness of the raw material of the disc to 1, the thickness from the hub mounting portion via the hub middle portion to the hat top portion is set to 1, the thicknesses from the hat top portion to the periphery of the ventilation hole portion and the flange portion are set to 0.6 to 0.8, the thickness of the bent portion at the inner peripheral edge of the hole portion in the ventilation hole portion is set to 1.5 to 2.0, and a rounded portion connecting the respective portions is a gradually changing rounded portion.

In accordance with this structure, the same operation as that of the fourth aspect mentioned above can be obtained.

### BRIEF DESCRIPTION OF THE DRAWINGS

Fig. 1 is a vertical cross sectional view of a disc wheel which shows a first embodiment in accordance with the present invention;
Fig. 2 is a front elevational view of the disc wheel shown in Fig. 1;
Fig. 3A is an enlarged vertical cross sectional view of a half of the disc in Fig. 1;
Fig. 3B is an enlarged vertical cross sectional view of a ventilation hole in Fig. 3A;
Fig. 4 is an enlarged vertical cross sectional view of a bonding portion between a rim and a disc in Fig. 1;
Fig. 5 is a graph which shows a stress ratio of each of portions in a disc having an uneven thickness in accordance with the first embodiment of the present invention and a conventional pressed disc with respect to allowable stresses of a disc;
Fig. 6 is a graph which shows a thickness ratio of each of portions in a disc having an uneven thickness in accordance with the first embodiment of the present invention and a conventional pressed disc with respect to a thickness of a raw material for a disc;
Fig. 7 is a vertical cross sectional view of a disc wheel which shows a second embodiment in accordance with the present invention;
Fig. 8 is a front elevational view of the disc wheel shown in Fig. 7;
Fig. 9A is an enlarged vertical cross sectional view of the disc in Fig. 7;
Fig. 9B is an enlarged vertical cross sectional view of a ventilation hole in Fig. 9A;
Fig. 10 is an enlarged vertical cross sectional view of a bonding portion between a rim and a disc in Fig. 7;
Fig. 11 is a graph which shows a stress ratio of each of portions in a disc having an uneven thickness in accordance with the second embodiment of the present invention and a conventional pressed disc with respect to allowable stresses of a disc;
Fig. 12 is a graph which shows a thickness ratio of each of portions in a disc having an uneven thickness in accordance with the second embodiment of the present invention and a conventional pressed disc with respect to a thickness of a raw material for a disc;
Fig. 13 is a vertical cross sectional view of a disc wheel which shows a third embodiment in accordance with the present invention;
Fig. 14 is a front elevational view of the disc wheel shown in Fig. 13;
Fig. 15A is an enlarged vertical cross sectional view of the disc in Fig. 13;
Fig. 15B is an enlarged vertical cross sectional view of a ventilation hole in Fig. 15A;
Fig. 16 is a perspective view as seen from an inner side of the disc, which shows a ventilation hole portion in accordance with the third embodiment;
Fig. 17 is a graph which shows a stress ratio of each of portions in the disc having an uneven thickness in accordance with the third embodiment of the present invention and a conventional pressed disc with respect to allowable stresses of a disc;
Fig. 18 is a graph which shows a thickness ratio of each of portions in the disc having an uneven thickness in accordance with the third embodiment of the present invention and a conventional pressed disc with respect to a thickness of a raw material for a disc;
Fig. 19 is a vertical cross sectional view of a disc wheel which shows a fourth embodiment in accordance with the present invention;
Fig. 20 is a front elevational view of the disc wheel shown in Fig. 19;
Fig. 21A is an enlarged vertical cross sectional view of the disc in Fig. 19;
Fig. 21B is an enlarged vertical cross sectional view of a ventilation hole in Fig. 21A;
Fig. 22 is a perspective view as seen from an inner side of the disc, which shows a ventilation hole in Fig. 19;
Fig. 23 is a graph which shows a stress ratio of each of portions in the disc having an uneven thickness in accordance with the fourth embodiment of the present invention and a conventional pressed disc with respect to allowable stresses;
Fig. 24 is a graph which shows a thickness ratio of each of portions in the disc having an uneven thickness in accordance with the fourth embodiment of the present invention and a conventional pressed disc with respect to a thickness of a raw material for a disc;
Figs. 25A and 25B are vertical cross sectional views which respectively show the first and second conventional discs;
Figs. 26A to 26C are perspective views which show a crack at a ventilation hole portion and a crack a welding portion in the rim shown in Figs. 25A and 25B;
Fig. 27 is a vertical cross sectional view of a disc wheel in which another conventional disc is fitted to a rim; and
Fig. 28 is an enlarged vertical cross sectional view which shows the other conventional disc.

### DESCRIPTION OF THE PREFERRED EMBODIMENTS

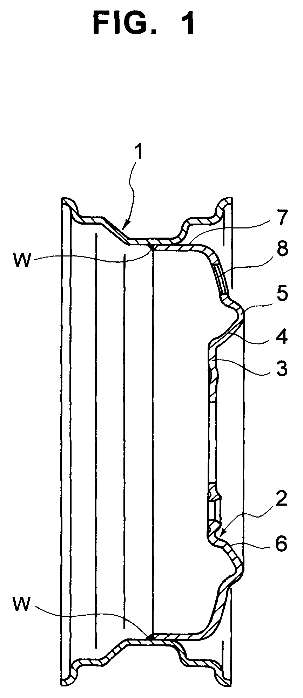

An embodiment in accordance with a first aspect of the present invention will be described below with reference to a first embodiment shown in Figs. 1 to 4.

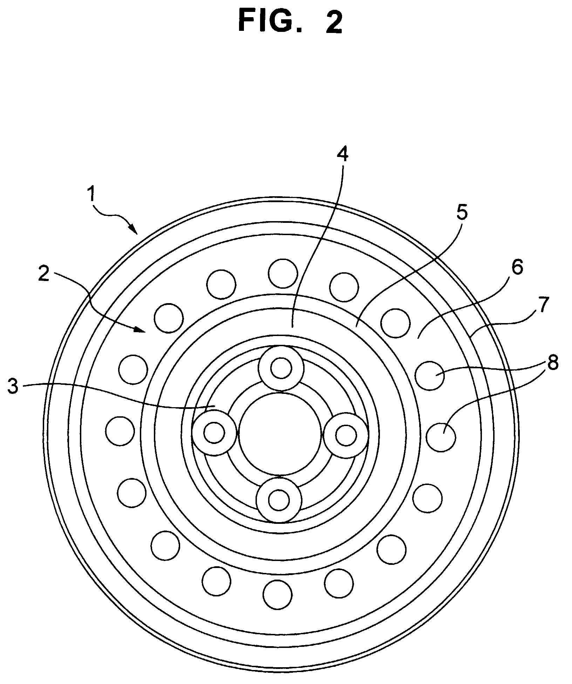

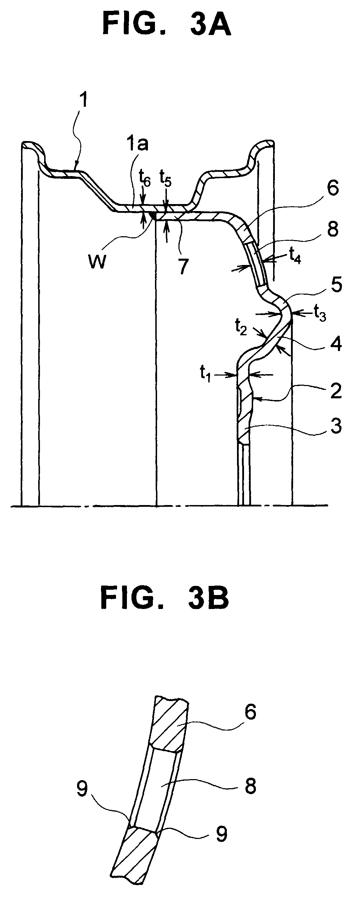

Fig. 1 is a vertical cross sectional view of a first embodiment of a disc wheel for a passenger car in accordance with the present invention, Fig. 2 is a front elevational view thereof, Fig. 3A is an enlarged vertical cross sectional view of a half of the disc, and Fig. 3B is an enlarged vertical cross sectional view of a ventilation hole.

The disc wheel for the passenger car is constituted by a plate-like rim 1 and a plate-like disc 2, and a flange portion 7 of the disc 2 and a drop portion 1a of the rim 1 are bonded by a welding W. The rim 1 is formed in accordance with a well-known method.

The disc 2 is constituted by a hub mounting portion 3 extending in a direction perpendicular to an axis thereof, a hat middle portion 4 continuously extending from the hub mounting portion 3 toward an outer side in a radial direction and an outer side in an axial direction, a hat top portion 5 continuously extending from the hat middle portion 4, a ventilation hole portion 6 continuously extending from the hat top portion 5 toward an inner peripheral surface of the rim and a flange portion 7 continuously extending from the ventilation hole portion 6 and fitted to the inner peripheral surface of a drop portion 1a of the rim 1, and these elements are integrally formed with an aluminum alloy plate. Further, ventilation holes 8 are formed in the ventilation hole portion 6 as shown in Fig. 3A, and there a plurality of the circular ventilation holes 8 are formed in a peripheral direction at a uniform interval, as shown in Fig. 2.

Next, a description will be given of setting a thickness of each of the portions in the disc 2 and the rim 1.

Inherently, since the hat outer peripheral portion has a low stress ratio, a thickness of this portion may be thin, however, in the case of forming the ventilation hole in the portion such as in the wheel for the passenger car, a total cross sectional area at that portion is reduced by the ventilation hole, a rigidity is reduced, a stress is concentrated to the ventilation hole portion 6 and a crack is easily generated. Accordingly, by increasing the thickness of the ventilation hole portion so as to increase the rigidity, the stress ratio of the ventilation hole portion is reduced so as to make a stress distribution uniform. Further, since the flange portion 7 disposed near the welding portion has a low stress ratio, the thickness thereof may be thin.

Taking the above matters into consideration, in an aluminum alloy disc wheel for a passenger car, the thickness of each of the elements is set such that an allowable stress distribution becomes uniform in a rotational bending test, in accordance with a stress analysis using a finite element method, and the disc is formed in such a manner as to satisfy the thickness distribution mentioned above.

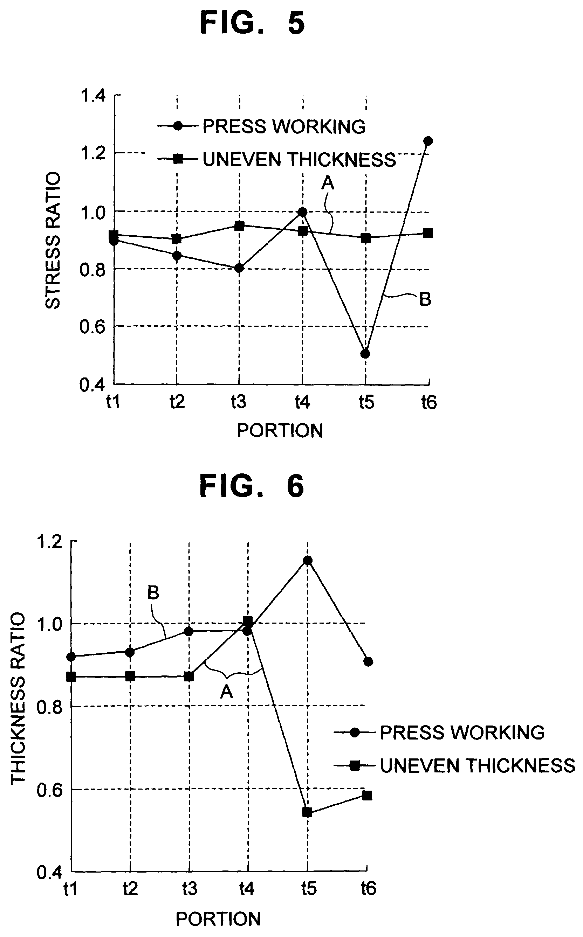

Fig. 5 shows a stress ratio of each of the portions in the disc having an uneven thickness in accordance with the first embodiment mentioned above and a pressed disc with respect to the allowable stresses of a disc. In Fig. 5, a line A shows a stress ratio of the disc having an uneven thickness in accordance with the present embodiment and a line B shows a stress ratio of the disc obtained by the conventional press working. In this case, in Fig. 5, a point t1 is the hub mounting portion 3, a point t2 is the hat middle portion 4, a point t3 is the hat top portion 5, a point t4 is the ventilation hole portion 6 and a point t5 is the flange portion 7 in Fig. 3A.

On the basis of the stress distribution mentioned above, the thickness of the hub mounting portion 3 is set to be equal to or smaller than an original thickness of a raw material, the thicknesses of the hat middle portion 4 and the hat top portion 5 are set to be smaller than that of the hub mounting portion, the thickness of the ventilation hole portion 6 is set to be the original thickness of the raw material, and the thickness of the flange portion 7 is set to be smaller than the thickness of any portions between the hub mounting portion and the ventilation hole portion, whereby the disc 2 is formed.

More particularly, the thickness ratio is optimally set such that when setting the thickness of the raw material of the disc to 1, the thickness t1 of the hub mounting portion 3 is 0.8 to 1.0, the thickness t2 of the hat middle portion 4 is 0.75 to 0.90, the thickness t3 of the hat top portion 5 is 0.75 to 0.90, the thickness t4 of the ventilation hole portion 6 is 1.0, and the thickness t5 of the flange portion 7 near the welding portion is 0.5 to 0.7. Further, the thickness t6 of the drop portion 1a in the rim 1 is set to 0.4 to 0.7. The rim 1 and the disc 2 formed on the basis of the thickness difference are shown in Fig. 3A.

Further, a rounded portion connecting the respective portions in the disc 2 mentioned above is a gradually changing rounded portion.

Fig. 6 shows a comparison between a thickness ratio of each of portions in the disc having an uneven thickness and the conventional pressed disc with respect to a thickness of a raw material for a disc and a thickness ratio of the drop 1a portion in the rim 1. In Fig. 6, a line A shows a thickness ratio in the disc having an uneven thickness in accordance with the first embodiment of the present invention and a line B shows a thickness ratio of the disc obtained by the conventional press working. In this case, in Fig. 6, a point t1 is the hub mounting portion 3, a point t2 is the hat middle portion 4, a point t3 is the hat top portion 5, a point t4 is the ventilation hole portion 6 and a point t5 is the flange portion 7 in Fig. 3A.

By setting the thickness ratio in each of the portions as mentioned above, a stress balance is improved, and a fatigue life in a rotational bending fatigue test is not reduced.

Further, it is possible to make the portion having a low stress ratio, that is, portions other than the ventilation hole portion 6 in the disc 2 significantly thinner than the pressed disc, as shown in Fig. 6, so that the wheel can be greatly lightened.

Further, since the thickness of the flange portion 7 in the disc 2 is small as mentioned above, it is possible to set the thickness t6 of the drop portion 1a in the rim 1 to be thin. In particular, the thickness ratio when setting the thickness of the raw material of the disc to 1 is set to 0.4 to 0.7. Accordingly, the thickness ratio of a welding portion W between the rim 1 and the disc 2 is reduced, a stress concentration in the welding portion W can be reduced, and the stress ratio can be reduced.

Still further, a whole of the rim can be lightened by making the thickness of the whole of the rim 1 small in correspondence to the thickness of the drop portion 1a in the rim 1 as mentioned above.

In this connection, due to the lightened weight of the rim 1 and the disc 2, in accordance with the disc wheel of the present embodiment, it is possible to 15 to 20 % reduce the weight in comparison with the conventional pressed disc wheel.

Next, a description will be given of the ventilation hole 8 mentioned above.

Generally, since the ventilation hole 8 is formed by a piercing process, a sharp edge portion is formed in a periphery of a hole end of the ventilation hole 8. In the sharp edge portion, a notch sensibility is increased, which becomes a reason for generating a crack due to a rotational fatigue, and a fatigue life is reduced.

Then, in the first embodiment of the present invention, a chamfering process is applied to the ventilation hole 8 mentioned above. Reference numeral 9 denotes a chamfered portion formed by the process. The chamfered portion 9 is formed to have a width of about 1 mm. In this case, the ventilation hole 8 is formed in a circular shape as shown in Fig. 2, and the chamfered portion 9 is formed at an inner peripheral edge and an outer peripheral edge of the ventilation hole 8 as shown in Fig. 3B.

An influence of the notch is reduced by forming the chamfered portion 9, so that a crack starting from the ventilation hole 8 due to the notch sensibility can be prevented.

In this case, a shape of the ventilation hole may be an oval shape or a rectangular shape.

Here, a locking die forging is employed as a method of processing the portions 3 to 7 in the disc 2 to an uneven thickness in accordance with the first embodiment of the present invention mentioned above, however, a spinning process may be employed. In any cases, thereafter, the ventilation hole 8 is pierced by a press working and a chamfering process is performed.

Further, the embodiment mentioned above corresponds to an embodiment executed by using a plate-like aluminum alloy, however, the present invention can be applied to a steel plate disc wheel.

As mentioned above, in accordance with the first aspect of the present invention, in the disc wheel in which the flange of the disc is fitted to the drop portion of the rim, since the thicknesses of the portions having a high stress ratio in the disc and the rim are increased and the thicknesses of the portions having a low stress ration are reduced, the stress balance is improved and it is possible to make the disc wheel light without reducing the fatigue life in the rotational bending fatigue test.

Further, since the thickness of the flange in the disc is reduced, it is possible to reduce a stress concentration in the welding portion between the rim and the disc even when reducing the thickness of the rim drop portion, so that it is possible to extend the fatigue life of the welding portion. Accordingly, it is possible to reduce the thickness of the whole of the rim without reducing the strength.

Further, due to the chamfering process in the sharp edge portion of the ventilation hole, it is possible to prevent the crack from generating from the ventilation hole portion in accordance with the notch sensibility, thereby further improving a durability of the disc wheel for the passenger car in which the ventilation hole is formed.

In this case, the same effects can be obtained in the case that the shape of the ventilation hole is oval or rectangular.

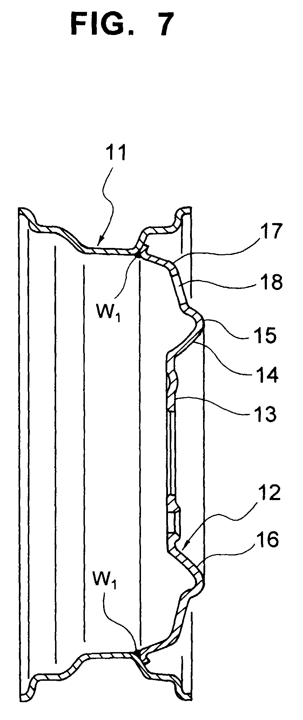

Next, an embodiment in accordance with a second aspect of the present invention will be described below with reference to a second embodiment shown in Figs. 7, 8 and 9.

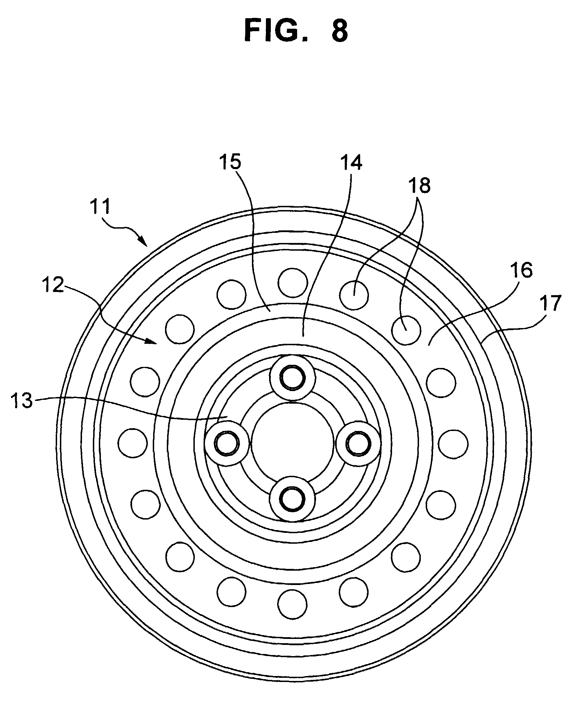

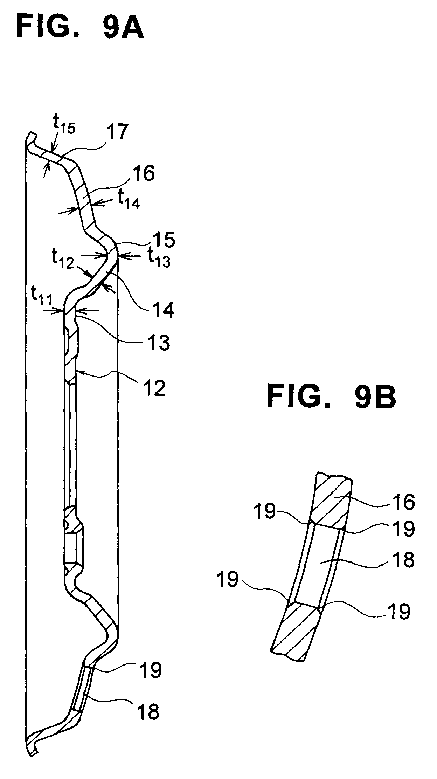

Fig. 7 is a vertical cross sectional view of a second embodiment of a disc wheel for a passenger car in accordance with the present invention, Fig. 8 is a front elevational view thereof, Fig. 9A is an enlarged vertical cross sectional view of the disc, and Fig. 9B is an enlarged vertical cross sectional view of a ventilation hole.

The disc wheel for the passenger car is constituted by a plate-like rim 11 and a plate-like disc 12, and a flange portion 17 of the disc 12 and a well angle portion of the rim 11 are bonded by a welding W1. The rim 11 is formed in accordance with a well-known method.

The disc 12 is constituted by a hub mounting portion 13 extending in a direction perpendicular to an axis thereof, a hat middle portion 14 continuously extending from the hub mounting portion 13 toward an outer side in a radial direction and an outer side in an axial direction, a hat top portion 15 continuously extending from the hat middle portion 14, a ventilation hole portion 16 continuously extending from the hat top portion 15 toward an inner peripheral surface of the rim and a flange portion 7 continuously extending from the ventilation hole portion 6 and fitted to the inner peripheral surface of the rim, and these elements are integrally formed by an aluminum alloy plate. Further, ventilation holes 18 are formed in the ventilation hole portion 16 as shown in Fig. 9A, and there a plurality of the circular ventilation holes 18 are formed in a peripheral direction at a uniform interval, as shown in Fig. 8.

Next, a description will be given of setting a thickness of each of the portions in the disc 12.

Inherently, since the hat outer peripheral portion has a low stress ratio, a thickness of this portion may be thin, however, in the case of forming the ventilation hole in the portion such as in the wheel for the passenger car, a total cross sectional area at that portion is reduced by the ventilation hole, a rigidity is lowered, a stress is concentrated to the ventilation hole portion 16 and a crack is easily generated. Accordingly, by increasing the thickness of the ventilation hole portion so as to increase the rigidity, the stress ratio of the ventilation hole portion is reduced so as to make a stress distribution uniform. Further, since the flange portion 17 disposed near the welding portion has a low stress ratio, the thickness thereof may be thin.

Taking the above matters into consideration, in an aluminum alloy disc wheel for a passenger car, the thickness of each of the elements is set such that an allowable stress distribution becomes uniform in a rotational bending test, in accordance with a stress analysis using a finite element method, and the disc is formed in such a manner as to satisfy the thickness distribution mentioned above.

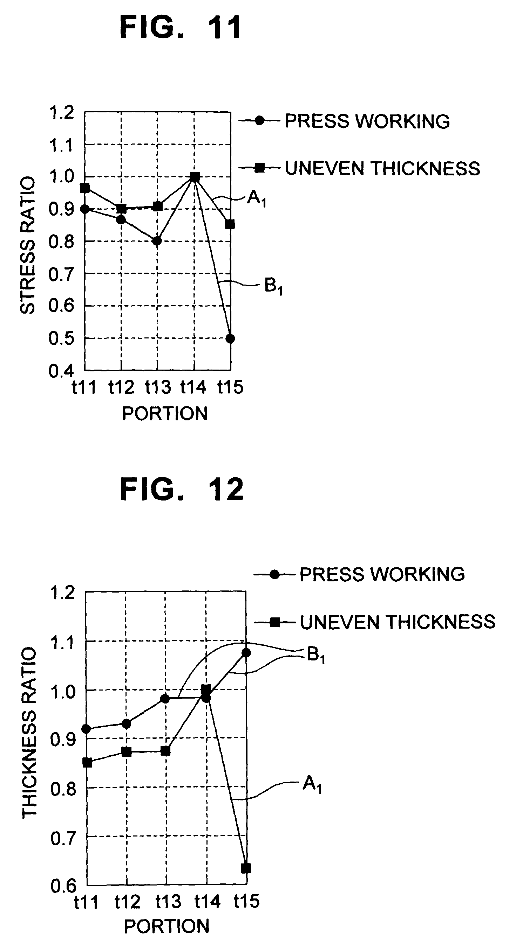

Fig. 11 shows a stress ratio of each of the portions in the disc having an uneven thickness in accordance with the second embodiment mentioned above and a pressed disc with respect to the allowable stresses of a disc. In Fig. 11, a line A1 shows a stress ratio in the disc having an uneven thickness in accordance with the present embodiment with respect to the allowable stress of a disc and a line B1 shows a stress ratio in the disc obtained by the conventional press working with respect to the allowable stress of a disc. In this case, in Fig. 11, a point t11 is the hub mounting portion 13, a point t12 is the hat middle portion 14, a point t13 is the hat top portion 15, a point t14 is the ventilation hole portion 16 and a point t15 is the flange portion 17 in Fig. 9A.

On the basis of the stress distribution mentioned above, the thickness of the hub mounting portion 13 is set to be equal to or smaller than an original thickness of a raw material, the thicknesses of the hat middle portion 14 and the hat top portion 15 are set to be smaller than that of the hub mounting portion, the thickness of the ventilation hole portion 16 is set to be the original thickness of the raw material, and the thickness of the flange portion 17 is set to be smaller than the thicknesses of the hat middle portion 14 and the hat top portion 15, that is, the thinnest one among the portions mentioned above, whereby the disc 12 is formed.

More particularly, the thickness ratio is optimally set such that when setting the thickness of the raw material of the disc to 1, the thickness t11 of the hub mounting portion 13 is 0.80 to 1.0, the thickness t12 of the hat middle portion 14 is 0.75 to 0.90, the thickness t13 of the hat top portion 15 is 0.75 to 0.90, the thickness t14 of the ventilation hole portion 16 is 1.0, and the thickness t15 of the flange portion 17 is 0.55 to 0.75. The disc formed on the basis of the thickness ratio is shown in Fig. 9A.

Further, a rounded portion connecting the respective portions mentioned above is a gradually changing rounded portion.

Fig. 12 shows a comparison between a thickness ratio of each of portions in the disc having an uneven thickness and the conventional pressed disc with respect to a thickness of a raw material for a disc. In Fig. 12, a line A1 shows a thickness ratio in the disc having an uneven thickness and a line B1 shows a thickness ratio of the disc obtained by the conventional press working. In this case, in Fig. 12, a point t11 is the hub mounting portion 13, a point t12 is the hat middle portion 14, a point t13 is the hat top portion 15, a point t14 is the ventilation hole portion 16 and a point t15 is the flange portion 17 in Fig. 9A.

By setting the thickness ratio in each of the portions as mentioned above, a stress balance is improved, and a fatigue life in a rotational bending fatigue test is not lowered.

Further, it is possible to make the portion having a low stress ratio, that is, portions other than the ventilation hole portion 16 significantly thinner than the pressed disc, as shown in Fig. 12, so that the wheel can be greatly lightened.

In this connection, in accordance with the disc wheel of the present embodiment, it is possible to 10 to 15 % reduce the weight in comparison with the conventional pressed disc wheel.

Next, a description will be given of the ventilation hole 18 mentioned above with reference to Fig. 9B.

Generally, as mentioned above, since the ventilation hole 18 is formed by a piercing process, a sharp edge portion is formed in a periphery of a hole end of the ventilation hole 18. In the sharp edge portion, a notch sensibility is increased, which becomes a reason for generating a crack due to a rotational fatigue, and a fatigue life is reduced.

Then, in the second embodiment of the present invention, a chamfering process is applied to the ventilation hole 18 mentioned above. Reference numeral 19 denotes a chamfered portion formed by the process. The chamfered portion 19 is formed to have a width of about 1 mm. In this case, the ventilation hole 18 is formed in a circular shape as shown in Fig. 8, and the chamfered portion 19 is formed at an inner peripheral edge and an outer peripheral edge of the ventilation hole 18 as shown in Fig. 9B.

An influence of the notch is reduced by forming the chamfered portion 19, so that a crack starting from the ventilation hole 18 due to the notch sensibility can be prevented.

In this case, a shape of the ventilation hole may be an oval shape or a rectangular shape in addition to the circular shape in the embodiment mentioned above, and the same effects can be obtained by the oval or rectangular shape.

Here, a locking die forging is employed as a method of processing the disc 12 having an uneven thickness in accordance with the second embodiment of the present invention mentioned above, however, a spinning process may be employed.

Further, the embodiment mentioned above corresponds to an embodiment executed by using a plate-like aluminum alloy, however, the present invention can be applied to a steel plate disc wheel.

As mentioned above, in accordance with the second aspect of the present invention, since the thicknesses of the portions having a high stress ratio in the disc are increased and the thicknesses of the portions having a low stress ration are reduced, the stress balance is improved and it is possible to make the disc wheel light without reducing the fatigue life in the rotational bending fatigue test.

Further, due to the chamfering process in the sharp edge portion of the ventilation hole, it is possible to prevent the crack from generating from the ventilation hole portion in accordance with the notch sensibility, thereby further improving a durability of the disc wheel for the passenger car in which the ventilation hole is formed.

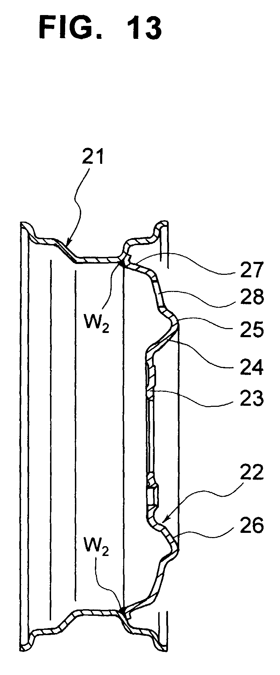

Next, an embodiment in accordance with a third aspect of the present invention will be described below with reference to a third embodiment shown in Figs. 13 to 16.

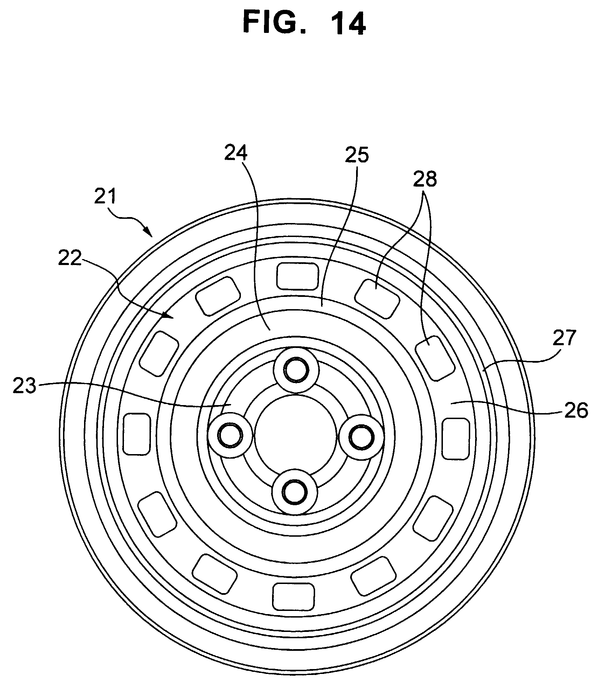

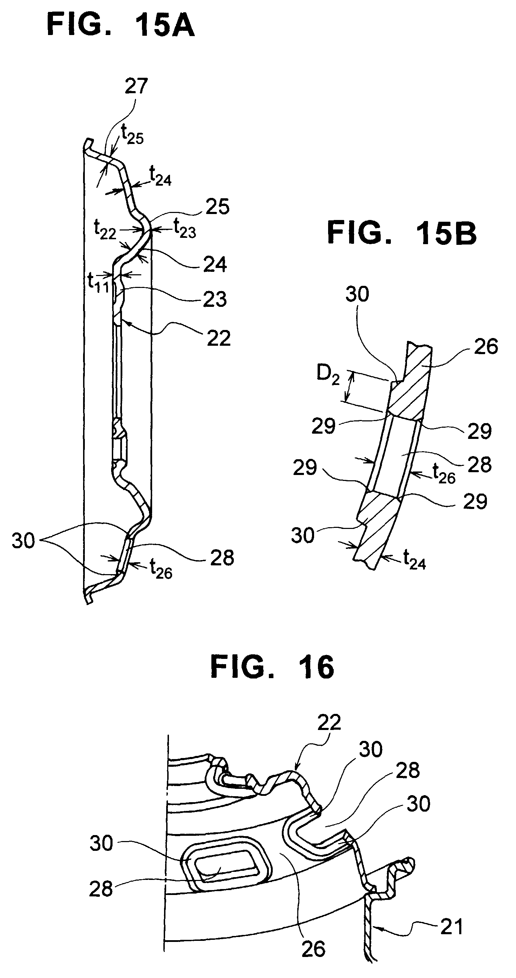

Fig. 13 is a vertical cross sectional view of the third embodiment of a disc wheel for a passenger car in accordance with the present invention, Fig. 14 is a front elevational view thereof, Fig. 15A is an enlarged vertical cross sectional view of the disc, and Fig. 15B is an enlarged vertical cross sectional view of a ventilation hole.

The disc wheel for the passenger car is constituted by a plate-like rim 21 and a plate-like disc 22, and a flange portion of the disc 22 and a well angle portion of the rim 21 are bonded by a welding W2. The rim 21 is formed in accordance with a well-known method.

The disc 22 is constituted by a hub mounting portion 23 extending in a direction perpendicular to an axis thereof, a hat middle portion 24 continuously extending from the hub mounting portion 23 toward an outer side in a radial direction and an outer side in an axial direction, a hat top portion 25 continuously extending from the hat middle portion 24, a ventilation hole portion 26 continuously extending from the hat top portion 25 toward an inner peripheral surface of the rim and a flange portion 27 continuously extending from the ventilation hole portion 26 and fitted to the inner peripheral surface of the rim, and these elements are integrally formed with an aluminum alloy plate. Further, ventilation holes 28 are formed in the ventilation hole portion 26 as shown in Fig. 15A, and there a plurality of the ventilation holes 28 are formed in a rectangular image and formed in a peripheral direction at a uniform interval, as shown in Figs. 14 and 16.

Further, a convex portion 30 is formed only in the periphery of the ventilation hole 28 mentioned above.

Next, a description will be given of setting a thickness of each of the portions in the disc 22.

Inherently, since the hat outer peripheral portion has a low stress ratio, a thickness of this portion may be thin, however, in the case of forming the ventilation holes in the portion such as in the wheel for the passenger car, a total cross sectional area at that portion is reduced by the ventilation hole, a rigidity is reduced, a stress is concentrated to the ventilation hole portion 26 and a crack is easily generated. Accordingly, by forming the convex portion 30 only in the periphery of the ventilation hole 28 and increasing the thickness of the portion so as to increase the rigidity, the stress ratio of the ventilation hole portion 26 is reduced so as to make a stress distribution uniform. Further, since the flange portion 27 disposed near the welding portion has a low stress ratio, the thickness thereof may be thin.

Taking the above matters into consideration, in an aluminum alloy disc wheel for a passenger car, the thickness of each of the elements is set such that an allowable stress distribution becomes uniform in a rotational bending test, in accordance with a stress analysis using a finite element method, and the disc is formed in such a manner as to satisfy the thickness distribution mentioned above.

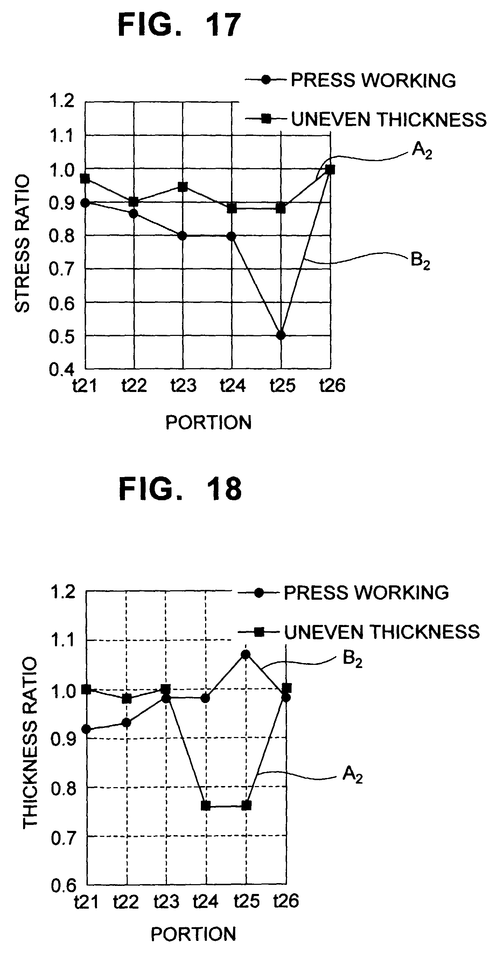

Fig. 17 shows a stress ratio of each of the portions in the disc having an uneven thickness in accordance with the third embodiment mentioned above and a pressed disc with respect to the allowable stresses in a disc. In Fig. 17, a line A2 shows a stress ratio in the disc having an uneven thickness in accordance with the present embodiment with respect to the allowable stress of a disc and a line B2 shows a stress ratio in the disc obtained by the conventional press working with respect to the allowable stress of a disc. In this case, in Fig. 17, a point t21 is the hub mounting portion 23, a point t22 is the hat middle portion 24, a point t23 is the hat top portion 25, a point t24 is the ventilation hole portion 26, a point t25 is the flange portion 27 in Fig. 15A and a point t26 is the periphery of the ventilation hole 28.

On the basis of the stress distribution mentioned above, the thicknesses of the hub mounting portion 23, the hat middle portion 24 and the hat top portion 25 are set to be substantially equal to an original thickness of a raw material, the thicknesses of the ventilation hole portion 26 and the flange portion 27 are set to be equal to each other and smaller than the thicknesses of the hub mounting portion 23, the hat middle portion 24 and the hat top portion 25 and the thickness of only the periphery of the ventilation hole 28 is set to be 1.0 to 1.3 times the thickness of the raw material, whereby the disc 22 is formed.

More particularly, the thickness ratio is optimally set such that when setting the original thickness of the raw material of the disc to 1, the thickness t21 of the hub mounting portion 23, the thicknesses t22 of the hat middle portion 24 and the thickness t23 of the hat top portion 25 are set to be about 1.0, more specifically speaking, the thickness t21 of the hub mounting portion 23 is 1, the thicknesses t22 of the hat middle portion 24 and the thickness t23 of the hat top portion 25 are about 1, the thickness t24 of the ventilation hole portion 26 is 0.6 to 0.8, the thickness t25 of the flange portion 27 near the welding portion is 0.6 to 0.8, and the thickness t26 of only the periphery of the ventilation hole 28 is 1.0 to 1.3. The disc formed on the basis of the thickness ratio is shown in Fig. 15A.

In order to increase the thickness of the periphery of the ventilation hole 28 mentioned above, the convex portion 30 is formed in the periphery of the ventilation hole 28. A width D2 of the convex portion 30 (refer to Fig. 15B) is set to 1 to 1.5 times the original thickness of the disc raw material.

As mentioned above, it is possible to increase the rigidity by forming the convex portion 30 so as to increase the thickness of only the periphery of the ventilation hole 28, thereby reducing the stress ratio. In this case, the convex portion 30 is provided in the inner side of the disc 22 in the illustrated embodiment.

Further, a rounded portion connecting the respective portions mentioned above is a gradually changing rounded portion.

Fig. 18 shows a comparison between a thickness ratio of each of portions in the disc having an uneven thickness in accordance with the third embodiment and the conventional pressed disc with respect to a thickness of a raw material for a disc. In Fig. 18, a line A2 shows a thickness ratio in the disc having an uneven thickness in accordance with the third embodiment of the present invention and a line B2 shows a thickness ratio of the disc obtained by the conventional press working. In this case, in Fig. 18, a point t21 is the hub mounting portion 23, a point t22 is the hat middle portion 24, a point t23 is the hat top portion 25, a point t24 is the ventilation hole portion 26, a point t25 is the flange portion 27 and a point 26 is the periphery of the ventilation hole 28 in Fig. 15A.

By setting the thickness ratio in each of the portions as mentioned above, a stress balance is improved, and a fatigue life in a rotational bending fatigue test is not reduced.

Further, it is possible to make the portion having a low stress ratio, that is, the ventilation hole portion 26 and the flange portion 27 significantly thinner than the pressed disc, as shown in Fig. 18, so that the wheel can be greatly lightened.

In this connection, in accordance with the disc wheel of the present embodiment, it is possible to 15 to 20 % reduce the weight in comparison with the conventional pressed disc wheel.

Next, a description will be given of the ventilation hole 28 mentioned above.

Generally, as mentioned above, since the ventilation hole 28 is formed by a piercing process, a sharp edge portion is formed in a periphery of a hole end of the ventilation hole 28. In the sharp edge portion, a notch sensibility is increased, which becomes a reason for generating a crack due to a rotational fatigue, and a fatigue life is reduced.

Then, in the third embodiment of the present invention, a chamfering process is applied to the ventilation hole 28 mentioned above in the same manner as that of the other embodiments mentioned above. Reference numeral 29 denotes a chamfered portion formed by the process. The chamfered portion 29 is formed to have a width of about 1 mm. In this case, the ventilation hole 28 is formed in a rectangular image as shown in Figs. 14 and 16, and the chamfered portion 29 is formed at an inner peripheral edge and an outer peripheral edge of the ventilation hole 28 as shown in Fig. 15B.

An influence of the notch is reduced by forming the chamfered portion 29, so that a crack starting from the ventilation hole 28 due to the notch sensibility can be prevented.

Here, a locking die forging is employed as a method of processing the uneven thickness of the disc 22 in accordance with the third embodiment of the present invention mentioned above, however, the uneven thickness of the portions 23 to 27 mentioned above may be formed by a spinning process and the convex portion 30 may be formed by making an excess metal by means of an upsetting process so as to increase the thickness.

Further, the embodiment mentioned above corresponds to an embodiment executed by using a plate-like aluminum alloy, however, the present invention can be applied to a steel plate disc wheel.

As mentioned above, in accordance with the third aspect of the present invention, since the thicknesses of the portions having a high stress ratio in the disc are increased and the thicknesses of the portions having a low stress ration are reduced, the stress balance is improved and it is possible to make the disc wheel light without reducing the fatigue life in the rotational bending fatigue test.

Further, due to the chamfering process in the sharp edge portion of the ventilation hole, it is possible to prevent the crack from generating from the ventilation hole portion in accordance with the notch sensibility, thereby further improving a durability of the disc wheel for the passenger car in which the ventilation holes are formed.

In this case, the shape of the ventilation hole may be circular or oval in addition to the rectangular image as in the embodiment mentioned above, and the same effects can be obtained in the case that the shape of the ventilation hole is circular or oval.

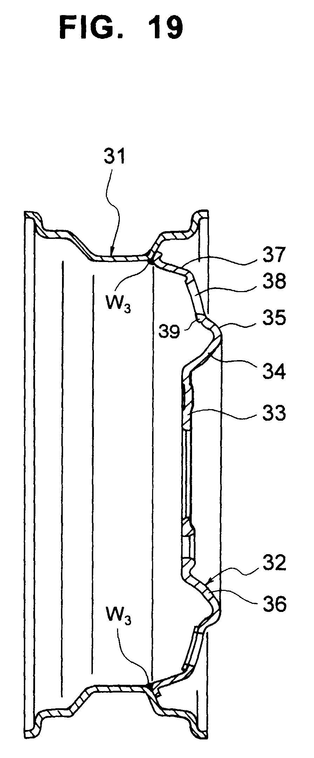

Further, an embodiment in accordance with a fourth aspect of the present invention will be described below with reference to a fourth embodiment shown in Figs. 19 to 22.

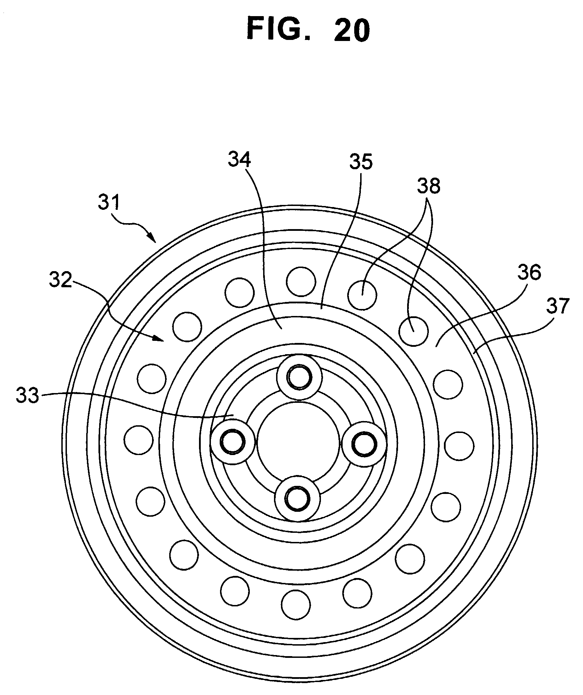

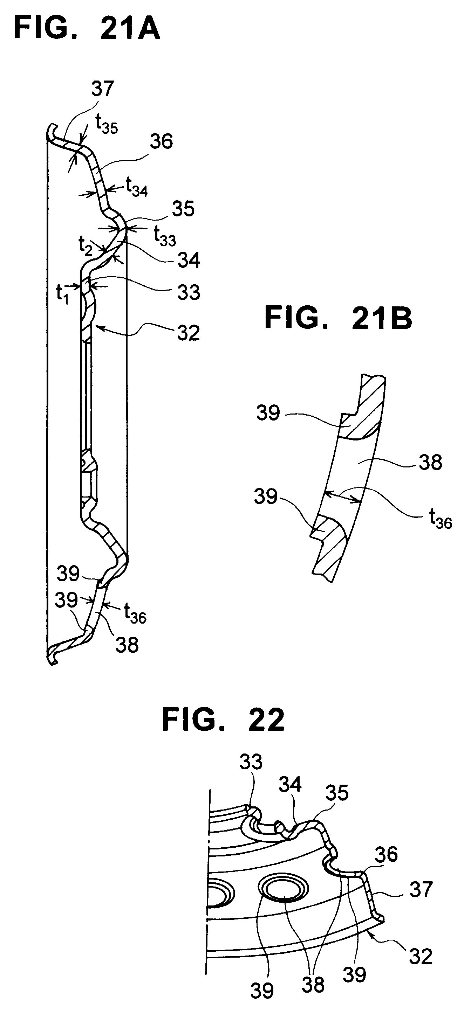

Fig. 19 is a vertical cross sectional view of a fourth embodiment of a disc wheel for a passenger car in accordance with the present invention, Fig. 20 is a front elevational view thereof, Fig. 21A is an enlarged vertical cross sectional view of the disc, and Fig. 21B is an enlarged vertical cross sectional view of a ventilation hole.

The disc wheel for the passenger car is constituted by a plate-like rim 31 and a plate-like disc 32, and a flange portion of the disc 32 and a well angle portion of the rim 31 are bonded by a welding W3. The rim 31 is formed in accordance with a well-known method.

The disc 32 is constituted by a hub mounting portion 33 extending in a direction perpendicular to an axis thereof, a hat middle portion 34 continuously extending from the hub mounting portion 33 toward an outer side in a radial direction and an outer side in an axial direction, a hat top portion 35 continuously extending from the hat middle portion 34, a ventilation hole portion 36 continuously extending from the hat top portion 35 toward an inner peripheral surface of the rim and a flange portion 37 continuously extending from the ventilation hole portion 36 and fitted to the inner peripheral surface of the rim 31, and these elements are integrally formed with an aluminum alloy plate. Further, ventilation holes 38 are formed in the ventilation hole portion 36 as shown in Fig. 21A, and there a plurality of the circular ventilation holes 38 are formed in a peripheral direction at a uniform interval, as shown in Figs. 20 and 22.

Next, a description will be given of setting a thickness of each of the portions in the disc 32.

Inherently, since the hat outer peripheral portion has a low stress ratio, a thickness of this portion may be thin, however, in the case of forming the ventilation hole in the portion such as in the wheel for the passenger car, a total cross sectional area at that portion is reduced by the ventilation hole, a rigidity is reduced, a stress is concentrated to the ventilation hole portion 36 and a crack is easily generated. Accordingly, by bending the inner peripheral edge of the ventilation hole 38 in the ventilation hole portion 36 and increasing the thickness of the inner peripheral surface of the ventilation hole 38 by a bent portion 39 so as to increase the rigidity, the stress ratio of the ventilation hole portion 36 is reduced so as to make a stress distribution uniform. Further, since the flange portion 37 disposed near the welding portion has a low stress ratio, the thickness thereof may be thin.

Taking the above matters into consideration, in an aluminum alloy disc wheel for a passenger car, the thickness of each of the elements is set such that an allowable stress distribution becomes uniform in a rotational bending test, in accordance with a stress analysis using a finite element method, and the disc is formed in such a manner as to satisfy the thickness distribution mentioned above.

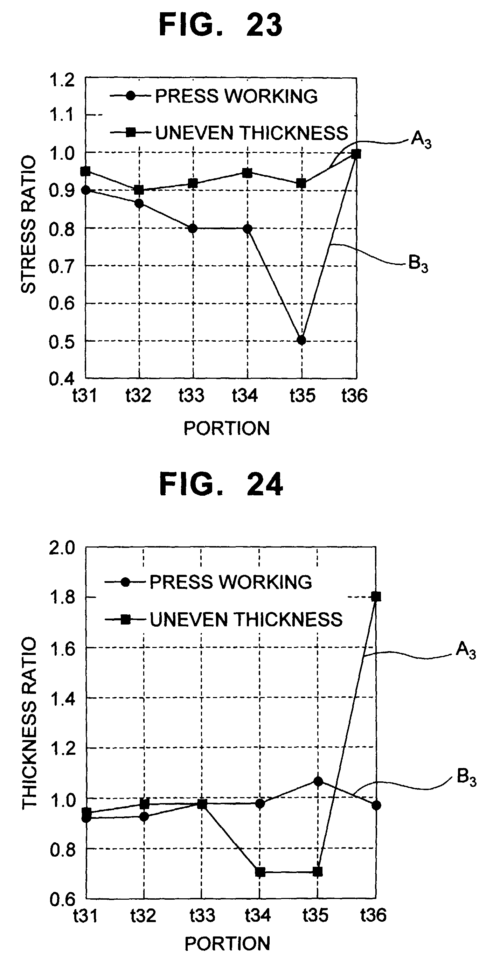

Fig. 23 shows a stress ratio of each of the portions in the disc having an uneven thickness in accordance with the fourth embodiment mentioned above and a pressed disc with respect to the allowable stresses of a disc. In Fig. 23, a line A3 shows a stress ratio in the disc having an uneven thickness in accordance with the present embodiment with respect to the allowable stress of a disc and a line B3 shows a stress ratio in the disc obtained by the conventional press working with respect to the allowable stress of a disc. In this case, in Fig. 23, a point t31 is the hub mounting portion 33, a point t32 is the hat middle portion 34, a point t33 is the hat top portion 35, a point t34 is the ventilation hole portion 36 and a point t35 is the flange portion 37 in Fig. 21A. Further, a point t36 is the peripheral portion in the ventilation hole 38.

On the basis of the stress distribution mentioned above, the thickness of the portion from the hub mounting portion 33 via the hat middle portion 34 to the hat top portion 35 is set to be substantially equal to an original thickness of a raw material, the thicknesses of the portion from the hat top portion 35 to the ventilation hole portion 36 and the flange portion 37 are set to be smaller than that of the hub mounting portion 33, and an edge of the periphery of the ventilation hole 38 is bent so as to set the thickness thereof to be greater than the hub mounting portion 33 by the bent portion 39, whereby the disc 31 is formed.

More particularly, the thickness ratio is optimally set such that when setting the thickness of the raw material of the disc to 1, the thickness t31 of the hub mounting portion 33 is set to about 1, the thickness t32 of the hat middle portion 34 is set to about 1, the thickness t33 of the hat top portion 35 is set to about 1, the thickness t34 of the ventilation hole portion 36 is set to 0.6 to 0.8, the thickness of the flange portion 37 near the welding portion is set to 0.6 to 0.8, and the thickness in the bending direction of the bent portion 39 formed at the peripheral edge of the ventilation hole 38 by bending process is set to 1.5 to 2.0. The disc formed on the basis of the thickness ratio is shown in Fig. 21A.

Further, a rounded portion connecting the respective portions mentioned above is a gradually changing rounded portion.

Fig. 24 shows a comparison between a thickness ratio of each of portions in the disc having an uneven thickness in accordance with the fourth embodiment and the conventional pressed disc with respect to a thickness of a raw material for a disc. In Fig. 24, a line A3 shows a thickness ratio in the disc having an uneven thickness and a line B3 shows a thickness ratio of the disc obtained by the conventional press working. In this case, in Fig. 24, a point t31 is the hub mounting portion 33, a point t32 is the hat middle portion 34, a point t33 is the hat top portion 35, a point t34 is the ventilation hole portion 36 and a point t35 is the flange portion 37 in Fig. 21A. Further, a point t36 is the periphery of the ventilation hole 38, that is, the bent portion 39.

By setting the thickness ratio in each of the portions as mentioned above, a stress balance is improved, and a fatigue life in a rotational bending fatigue test is not reduced.

Further, it is possible to make the portion having a low stress ratio, that is, the ventilation hole portion 36 and the flange portion 37 significantly thinner than the pressed disc, as shown in Fig. 24, so that the wheel can be greatly lightened.

In this connection, in accordance with the disc wheel of the present embodiment, it is possible to 15 to 20 % reduce the weight in comparison with the conventional pressed disc wheel.

Further, since the ventilation hole is generally formed by a piercing process, a sharp edge portion is formed in a periphery of a hole end of the ventilation hole. In the sharp edge portion, a notch sensibility is increased, which becomes a reason for generating a crack due to a rotational fatigue, and a fatigue life is reduced.

However, an influence of the notch is reduced by burring the inner periphery of the ventilation hole 38, so that a crack starting from the ventilation hole 38 due to the notch sensibility can be prevented.

In this case, a shape of the ventilation hole may be an oval shape or a rectangular shape in addition to the circular shape as in the embodiments mentioned above, and the same effects can be obtained by the oval or rectangular shape.

Here, a locking die forging is employed as a method of processing the portions 33 to 37 in the disc 32 to an uneven thickness in accordance with the first embodiment of the present invention mentioned above, however, a spinning process may be employed. In any cases, thereafter, the ventilation hole 38 is pierced by a press working and a burring process is performed so as to form the bent portion 39.

Further, the embodiment mentioned above corresponds to an embodiment executed by using a plate-like aluminum alloy, however, the present invention can be applied to a steel plate disc wheel.

As mentioned above, in accordance with the fourth aspect of the present invention, since the thickness of the portions having a high stress ratio in the disc is increased and the thickness of the portions having a low stress ration is reduced, the stress balance is improved and it is possible to make the disc wheel light without reducing the fatigue life in the rotational bending fatigue test.

Further, the sharp edge portion is not generated in the ventilation hole by hemming the periphery of the ventilation hole, and it is possible to prevent the crack from generating from the ventilation hole portion in accordance with the notch sensibility, thereby further improving a durability of the disc wheel for the passenger car in which the ventilation holes are formed.

## Claims

1. A disc wheel for a passenger car comprising a plate-like rim and a plate-like disc, said disc having a hub mounting portion extending in a direction perpendicular to an axis thereof, a hat middle portion continuously extending from said hub mounting portion toward an outer side in a radial direction and an outer side in an axial direction, a hat top portion continuously extending from said hat middle portion, a ventilation hole portion continuously extending from said hat top portion toward an inner peripheral surface, of the rim and a flange portion continuously extending from said ventilation hole portion and fitted to the inner peripheral surface of the rim, and said rim inner peripheral surface and the disc flange being welded,
wherein a thickness of said disc wheel is varied in a diametrical direction at at least one of said hub mounting portion, the hat middle portion, the hat top portion, the ventilation hole portion and the flange portion.

2. A disc wheel for a passenger car as claimed in claim 1, wherein the thickness of said hub mounting portion is set to be equal to or smaller than an original thickness of a raw material, the thicknesses of said hat middle portion and the hat top portion are set to be smaller than that of the hub mounting portion, the thickness of said ventilation hole portion is set to be the original thickness of the raw material, and the thickness of said flange portion is set to be smaller than the thickness of any portions between said hub mounting portion and the ventilation hole portion.

3. A disc wheel for a passenger car as claimed in claim 2, wherein when setting the thickness of the raw material of said disc to 1, the thickness of the hub mounting portion is 0.8 to 1.0, the thicknesses of said hat middle portion and the hat top portion are 0.75 to 0.90, the thickness of the ventilation hole portion extending from said hat top portion to the flange portion is 1.0, the thickness of said flange portion is 0.5 to 0.7, and a rounded portion connecting the respective portions is a gradually changing rounded portion.

4. A disc wheel for a passenger car as claimed in claim 3, wherein the thickness of the drop portion in said rim may be set to 0.4 to 0.7 when setting the thickness of the raw material of said disc to 1.

5. A disc wheel for a passenger car as claimed in claim 2, wherein a sharp edge in a ventilation hole formed in said ventilation hole portion is beveled.

6. A disc wheel for a passenger car as claimed in claim 3, wherein a sharp edge in a ventilation hole formed in said ventilation hole portion is beveled.

7. A disc wheel for a passenger car as claimed in claim 4, wherein a sharp edge in a ventilation hole formed in said ventilation hole portion is beveled.

8. A disc wheel for a passenger car as claimed in claim 1, wherein the thickness of said hub mounting portion is set to be equal to or smaller than the original thickness of the raw material, the thicknesses of said hat middle portion and the hat top portion are set to be smaller than that of the hub mounting portion, the thickness of said ventilation hole portion is set to be equal to the original thickness of the raw material, and the thickness of said flange portion is set to be smaller than those of said hat middle portion and the hat top portion.

9. A disc wheel for a passenger car as claimed in claim 8, wherein when setting the thickness of the raw material of said disc to 1, the thickness of the hub mounting portion is 0.8 to 1.0, the thicknesses of said hat middle portion and the hat top portion are 0.75 to 0.90, the thickness of the ventilation hole portion extending from said hat top portion to the flange portion is 1.0, the thickness of said flange portion is 0.55 to 0.75, and a rounded portion connecting the respective portions is a gradually changing rounded portion.

10. A disc wheel for a passenger car as claimed in claim 8, wherein a sharp edge in a ventilation hole formed in said ventilation hole portion is chamfered.

11. A disc wheel for a passenger car as claimed in claim 9, wherein a sharp edge in a ventilation hole formed in said ventilation hole portion is chamfered.

12. A disc wheel for a passenger car as claimed in claim 1, wherein the thickness of said hub mounting portion, the hat middle portion and the hat top portion is set to be substantially equal to the original thickness of the raw material, the thicknesses of said ventilation hole portion and the flange portion are set to be equal to each other and smaller than that of said hat top portion, and the thickness around said ventilation hole is set to be 1.0 to 1.3 times the original thickness of the raw material and to be formed in a convex shape.

13. A disc wheel for a passenger car as claimed in claim 12, wherein when setting the thickness of the raw material of said disc to 1, the thicknesses of the hub mounting portion, the hat middle portion and the hat top portion are set to be substantially 1, the thicknesses of said ventilation hole portion and the flange portion are set to 0.6 to 0.8, the thickness of the convex portion around said ventilation hole is set to 1.0 to 1.3, and a rounded portion connecting the respective portions is a gradually changing rounded portion.

14. A disc wheel for a passenger car as claimed in claim 12, wherein a sharp edge in the ventilation hole formed in said ventilation hole portion is chamfered.

15. A disc wheel for a passenger car as claimed in claim 13, wherein a sharp edge in the ventilation hole formed in said ventilation hole portion is chamfered.

16. A disc wheel for a passenger car as claimed in claim 1, wherein the thickness from said hub mounting portion via the hat middle portion to the hat top portion is set to be substantially equal to the original thickness of the raw material, the thicknesses from said hat middle portion to the ventilation hole portion and the flange portion are set to be smaller than the thickness of the hub mounting portion, and the inner periphery of said ventilation hole portion is made thicker than the hub mounting portion by a burring process.

17. A disc wheel for a passenger car as claimed in claim 16, wherein when setting the thickness of the raw material of said disc to 1, the thickness from the hub mounting portion via the hub middle portion to the hat top portion is set to 1, the thicknesses from said hat top portion to the periphery of the ventilation hole portion and the flange portion are set to 0.6 to 0.8, the thickness of the bent portion at the inner peripheral edge of the hole portion in said ventilation hole portion is set to 1.5 to 2.0, and a rounded portion connecting the respective portions is a gradually changing rounded portion.
